# EUROPEAN PATENT APPLICATION

(11) **EP 4 749 399 A1**
(43) Date of publication of application: **27.05.2026**
(21) Application number: 24909854.2
(22) Date of filing: 16.08.2024
(51) Int. Cl.: G06F 1/3287

(54) **PROCESS FREEZING METHOD AND APPARATUS**

(30) Priority: 27.12.2023 CN 202311835942
(71) Applicant: Honor Device Co., Ltd., Shenzhen, Guangdong 518040 (CN)
(72) Inventor: WANG, Wei, Shenzhen, Guangdong 518040 (CN); XIN, Zhenwen, Shenzhen, Guangdong 518040 (CN); SUN, Wenyong, Shenzhen, Guangdong 518040 (CN)
(74) Representative: Goddar, Heinz J.
(86) International application number: PCT/CN2024/112827
(87) International publication number: WO 2025/138903

(57) **Abstract**

Embodiments of this application relate to the field of terminals and provide a process freezing method and apparatus, which can reduce resource consumption of a background process and improve performance and endurance of an electronic device. The method is applied to an electronic device, and includes: creating a target thread in response to the electronic device being in a first scenario; determining a to-be-frozen process based on the target thread; and setting the to-be-frozen process to an uninterruptible sleep state (uninterruptible sleep status) based on the target thread.

## Description

This application claims priority to Chinese Patent Application No. 202311835942.7, filed with the China National Intellectual Property Administration on December 27, 2023 and entitled "PROCESS FREEZING METHOD AND APPARATUS", which is incorporated herein by reference in its entirety.

### TECHNICAL FIELD

Embodiments of this application relate to the field of terminals, and in particular, to a process freezing method and apparatus.

### BACKGROUND

Currently, an operating system (for example, an Android operating system) of an electronic device (for example, a mobile phone) may run processes of some applications in a background, to ensure a startup speed when a user resumes using the processes of the applications. However, if an excessively large quantity of processes (that is, background processes) run in the background, a relatively large quantity of system resources such as a central processing unit (central processing unit/processor, CPU) and a memory of an electronic device may be occupied.

### SUMMARY

Embodiments of this application provide a process freezing method and apparatus, which can reduce resource consumption of a background process and improve performance and endurance of an electronic device.

To implement the foregoing objective, the following technical solutions are used in the embodiments of this application:

According to a first aspect, a process freezing method is provided, applied to an electronic device. The method includes: creating a target thread in response to the electronic device being in a first scenario; determining a to-be-frozen process based on the target thread; and setting the to-be-frozen process to an uninterruptible sleep state (uninterruptible sleep status) based on the target thread.

Based on the method provided in this application, when the electronic device is in the first scenario, the target thread may be created, and the to-be-frozen process in a plurality of processes of the electronic device is set to the uninterruptible sleep state based on the target thread, so that resource consumption of a background process can be reduced, and performance and endurance of the electronic device can be improved.

In a possible implementation, the electronic device includes a first application, and the first scenario includes at least one of an electronic device unlocking scenario, a scenario in which the electronic device enters or exits a leftmost home screen (leftmost home screen), a scenario in which a screen is off when the electronic device answers a call, a first application starting scenario, a first application exiting scenario, a shooting scenario of the first application, and a frame loss scenario in the first application during sliding. In other words, in the electronic device unlocking scenario, the scenario in which the electronic device enters or exits the leftmost home screen, the scenario in which a screen is off when the electronic device answers a call, the first application starting scenario, the first application exiting scenario, the shooting scenario of the first application, or the frame loss scenario in the first application during sliding, the electronic device may create the target thread, and set the to-be-frozen process in the plurality of processes of the electronic device to the uninterruptible sleep state based on the target thread, so that resource consumption of an application running in a background can be reduced, and performance and endurance of the electronic device can be improved.

In a possible implementation, the to-be-frozen process is a process other than a foreground process, a process related to the foreground process, and a background process allowed to run by a user. In this way, freezing of the foreground process, the process related to the foreground process, and the background process allowed to run by the user can be avoided, thereby avoiding affecting user experience.

In a possible implementation, the background process allowed to run by the user includes at least one of a navigation process, a motion or health detection process, and an audio process. In this way, freezing of a process allowed to run by a user, for example, the navigation process, the motion or health detection process, or the audio process, can be avoided, thereby avoiding affecting user experience.

In a possible implementation, the setting the to-be-frozen process to an uninterruptible sleep state includes: setting the to-be-frozen process to the uninterruptible sleep state within first duration, where the first duration is determined according to start time and end time of the first scenario. For example, the first duration may be duration of a time period between the start time and the end time of the first scenario. In other words, an example in which the first scenario is the first application starting scenario is used. When the first application is in a starting scenario, the electronic device may create the target thread. Process information of the plurality of processes of the electronic device is collected by using the target thread. The to-be-frozen process in the plurality of processes is determined. The to-be-frozen process is set to the uninterruptible sleep state (that is, the to-be-frozen process is frozen). Therefore, a corresponding background process may be frozen when the electronic device displays a startup animation of the first application, to avoid a problem of freezing when the electronic device displays the startup animation of the first application, so as to improve user experience.

In a possible implementation, the setting the to-be-frozen process to an uninterruptible sleep state includes: setting the to-be-frozen process to the uninterruptible sleep state within first duration, where the first duration is determined according to first preset duration corresponding to the first scenario. In other words, the first duration may be determined based on the first preset duration corresponding to the first scenario, and the to-be-frozen process is set to the uninterruptible sleep state within the first duration, so that resource consumption of an application running in a background can be reduced, and performance and endurance of the electronic device can be improved.

In a possible implementation, the first preset duration corresponding to the first scenario is determined according to the following steps: step 1: when the electronic device is in the first scenario, freezing N background processes for second preset duration, where N is an integer greater than or equal to 1; step 2: within the second preset duration, calculating a processor load value once every a preset time interval; step 3: recording a first time difference between start time of the second preset duration and target time, where the target time is time at which a last calculated processor load value is less than a preset value within the second preset duration; and step 4: performing step 1 to step 3 for L times to obtain L first time differences, calculating an average value of the L first time differences, and determining the first preset duration corresponding to the first scenario according to the average value, where L is an integer greater than or equal to 2. It should be noted that when a last processor load value is less than the preset value (for example, 80%) within the second preset duration, it may be considered that a load reduction effect is achieved. In other words, a time difference (the first time difference) between a start moment of the second preset duration and a moment at which the last processor load value is less than the preset value is proper duration for freezing the background process. Therefore, it is proper to determine freezing duration (namely, the first duration) corresponding to different scenarios according to an average value of a plurality of (for example, L) first time differences. This can not only achieve the load reduction effect, but also avoid a problem that stability of the background process is affected due to excessively long freezing duration.

In a possible implementation, when the first scenario is the scenario in which the electronic device enters the leftmost home screen or the scenario in which the screen is off when the electronic device answers a call, the first preset duration corresponding to the first scenario is 1 second; when the first scenario is the electronic device unlocking scenario or the frame loss scenario in the first application during sliding, the first preset duration corresponding to the first scenario is 1.5 seconds; and when the first scenario is the first application starting scenario, the first preset duration corresponding to the first scenario is 3 seconds.

In a possible implementation, the electronic device includes a second application, and the method further includes: setting, in response to the second application being in a second scenario, a process corresponding to the first application to the uninterruptible sleep state within the first duration. In this way, within a freezing period (namely, within the first duration), if it is identified that the second application is in the second scenario, it indicates that the process corresponding to the first application is switched to a background process, and the process (namely, a new background process) corresponding to the first application may be frozen. This avoids affecting a startup or running speed of the second application due to occupation of relatively high CPU load by the process of the first application.

In a possible implementation, the setting a process corresponding to the second application to the uninterruptible sleep state includes: if a second time difference between start time of the second scenario and end time of the first duration is greater than a preset time difference, setting the process corresponding to the second application to the uninterruptible sleep state. It should be noted that, if the second time difference is greater than the preset time difference (for example, x milliseconds, where x is greater than 0), it indicates that the first duration still lasts for relatively long time. In this case, the process of the first application may be specifically frozen, to avoid affecting startup or running of the second application due to occupation by the process of the first application.

In a possible implementation, the to-be-frozen process exits the uninterruptible sleep state after the to-be-frozen process is set to the uninterruptible sleep state for the first duration, and the to-be-frozen process is set to the uninterruptible sleep state again after an interval of at least second duration. In other words, within the first duration, the to-be-frozen process is in the uninterruptible sleep state (a frozen state), and within the second duration, the to-be-frozen process is not in the uninterruptible sleep state (an unfrozen state). In this way, a problem that stability of an application is affected due to continuous freezing of the to-be-frozen process can be avoided.

In a possible implementation, the second duration is 1 second.

In a possible implementation, the electronic device includes a third application, and the method further includes: within the second duration, in response to the third application being in a third scenario, recording start time of the third scenario, calculating a third time difference between the start time of the third scenario and end time of the second duration, and setting the to-be-frozen process to the uninterruptible sleep state after the third time difference. In this way, freezing may be triggered immediately when a freezing interval (namely, the second duration) ends, to reduce processor load as soon as possible.

According to a second aspect, this application provides a chip system. The chip system includes one or more interface circuits and one or more processors. The interface circuit is connected to the processor through a line. The foregoing chip system may be used in an electronic device including a communication module and a memory. The interface circuit is configured to: receive a signal from the memory of the electronic device, and send the received signal to the processor, where the signal includes computer instructions stored in the memory. When the processor executes the computer instructions, the electronic device may perform the method according to any one of the first aspect and the possible design manners of the first aspect.

According to a third aspect, this application provides a computer-readable storage medium. The computer-readable storage medium includes computer instructions. When the computer instructions are run on an electronic device (for example, a mobile phone), the electronic device is enabled to perform the method according to any one of the first aspect and the possible design manners of the first aspect.

According to a fourth aspect, this application provides a computer program product. When the computer program product runs on a computer, the computer is enabled to perform the method according to any one of the first aspect and the possible design manners of the first aspect.

According to a fifth aspect, an embodiment of this application provides an application process management apparatus, including a processor. The processor is coupled with a memory, the memory stores program instructions, and when the program instructions stored in the memory are executed by the processor, the apparatus implements the method according to any one of the first aspect and the possible design manners of the first aspect. The apparatus may be an electronic device or a server device, or may be a component of the electronic device or the server device, such as a chip.

According to a sixth aspect, an embodiment of this application provides an application process management apparatus, where the apparatus may be divided into different logical units or modules according to functions, and the units or modules perform different functions, so that the apparatus performs the method according to any one of the first aspect and the possible design manners of the first aspect.

It may be understood that, for beneficial effects that can be implemented by the chip system according to the second aspect, the computer-readable storage medium according to the third aspect, the computer program product according to the fourth aspect, and the apparatus according to the fifth aspect and the sixth aspect provided above, refer to the beneficial effects in any one of the first aspect and the possible design manners of the first aspect. Details are not described herein again.

### BRIEF DESCRIPTION OF DRAWINGS

FIG. 1 is a schematic diagram of a freezing mechanism of a related technology according to an embodiment of this application;
FIG. 2 is a schematic diagram of an unfreezing mechanism of a related technology according to an embodiment of this application;
FIG. 3 is a schematic diagram of a hardware structure of an electronic device according to an embodiment of this application;
FIG. 4 is a schematic diagram of a software architecture of an electronic device according to an embodiment of this application;
FIG. 5 is a schematic diagram of interaction between modules according to an embodiment of this application;
FIG. 6 is a schematic diagram of a scenario according to an embodiment of this application;
FIG. 7 is a schematic diagram of another scenario according to an embodiment of this application;
FIG. 8 is a schematic diagram of another scenario according to an embodiment of this application;
FIG. 9 is a schematic interactive diagram applicable to a process freezing method according to an embodiment of this application;
FIG. 10 is a schematic diagram of a state of a process according to an embodiment of this application;
FIG. 11 is a schematic diagram of a test scenario for rapid application startup and exit according to an embodiment of this application;
FIG. 12 is a schematic diagram of a state of another process according to an embodiment of this application;
FIG. 13 is a schematic diagram in which freezing cannot be triggered within a freezing period according to an embodiment of this application;
FIG. 14 is a schematic diagram of a state of another process according to an embodiment of this application;
FIG. 15 is a schematic diagram of a targeted freezing solution according to an embodiment of this application;
FIG. 16 is a schematic diagram in which freezing cannot be triggered within a freezing interval according to an embodiment of this application;
FIG. 17 is a schematic diagram of an additional freezing solution according to an embodiment of this application; and
FIG. 18 is a schematic structural diagram of a chip system according to an embodiment of this application.

### DESCRIPTION OF EMBODIMENTS

The following describes technical solutions in embodiments of this application with reference to the drawings in the embodiments of this application. In descriptions of this application, unless otherwise specified, "at least one" means one or more, and "a plurality of" means two or more. In addition, for ease of describing the technical solutions in the embodiments of this application clearly, in the embodiments of this application, terms such as "first" and "second" are used to distinguish same or similar items with basically same functions and roles. A person skilled in the art may understand that the terms "first", "second", and the like do not limit a quantity and an execution order, and the terms "first", "second", and the like do not indicate a definite difference.

For clear and concise description of the following embodiments, brief introduction to a related concept or technology is first provided.

Foreground process: The foreground process is a process that can be seen and operated by a user. The foreground process may preferentially run on a processor (for example, a large-core processor) having a relatively strong processing capability, with a fast execution speed and a higher scheduling priority.

Background process: The background process is a process that cannot be operated (other than to be closed) by a user. A priority of the background process is lower than a priority of the foreground process. The background process typically runs on a processor (for example, a small-core processor) having a relatively weak processing capability, with a relatively slow execution speed. The foreground process and the background process may be exchanged.

Thread (thread): The thread is the smallest unit of processing that can be scheduled in an operating system. The thread is included in a process, and is an actual operation unit in the process. A thread refers to a control flow in a single sequence in the process. A plurality of threads may run concurrently in a process, and each thread performs different tasks in parallel. The thread is a basic unit for independent scheduling and assignment. The thread may be a kernel thread scheduled by a kernel of the operating system; may be a user thread automatically scheduled by a user process; or may be a thread scheduled by a combination of the kernel and the user process.

Freezing: An electronic device limits occupation of a system resource by a background process. The system resource may include a CPU resource, a sensor, a memory, or the like.

Unfreezing: The electronic device releases the limitation on occupation of the system resource by the background process.

Currently, an operating system (for example, an Android operating system) of an electronic device (for example, a mobile phone) may run processes of some applications in a background, to ensure a startup speed when a user resumes using the processes of the applications. However, if an excessively large quantity of processes (namely, background processes) run in the background, a relatively large quantity of system resources such as a CPU and a memory of the electronic device are occupied. How to limit the background process, so as not to affect performance and endurance of the electronic device is an urgent matter to be resolved.

In some related technologies, to resolve the foregoing problem, a freezing policy of a tombstone mechanism may be used to limit resource use of a background process.

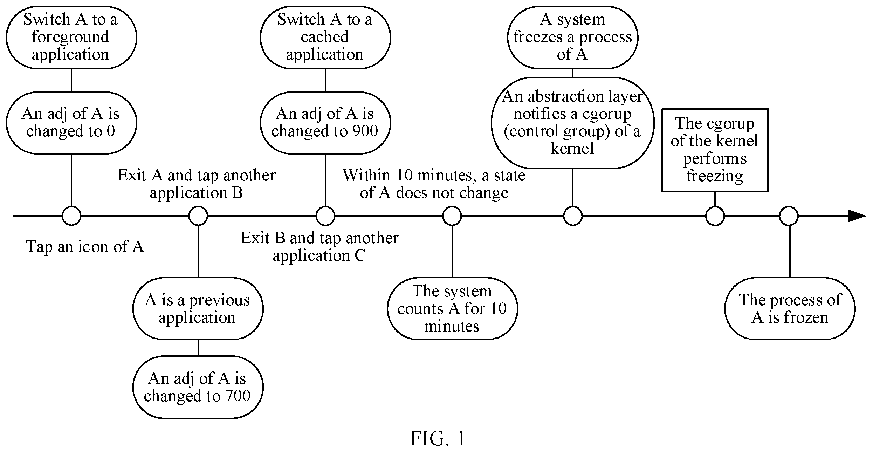

For example, as shown in FIG. 1, in response to an operation of tapping an icon of an application A (A for short in the figure), an activity manager service (activity manager service, AMS) may invoke updateOomAdjLocked to update the adj (CACHED_APP_MIN_adj) of the application A. The adj of the application A may be used for indicating a process priority of the application A. For example, the adj of (a process of) the application A may be changed to 0, and the application A is switched to a foreground application (that is, the process of the application A is a foreground process). In response to an operation of exiting the application A and tapping an icon of an application B, the AMS may change the adj of the application A to 700, and change the application A to a previous application. In response to an operation of exiting the application B and tapping an icon of an application C, the AMS may change the adj of the application A to 900, and switch the application A to a cached (cached) application (that is, the process of the application A is in a cached state). When the adj of the application A is greater than or equal to 900, a system may freeze the process of the application A (for example, CachedAppOptimizer may invoke freezeAppAsyncLSP to freeze the process of the application A). To avoid a case that there is still a task that has not been completed when the process of the application A enters the cached state, indirectly affecting user experience, the system may freeze the process of the application A after debounce time (that is, a debounce time, which may be, for example, 10 minutes). An abstraction layer may instruct a control group (control groups, cgroup) of a kernel to freeze the process of the application A, and the cgroup of the kernel may freeze the process of the application A, so that the process of the application A is frozen. In this embodiment of this application, exiting an application (for example, the application A) indicates that the application A is switched to a background (that is, the process of the application A is switched to a background process), and the application A may be directly started from the background next time. Closing an application (for example, the application A) indicates that the process of the application A is killed, and an OnCreate method needs to be invoked again when the application A is started next time.

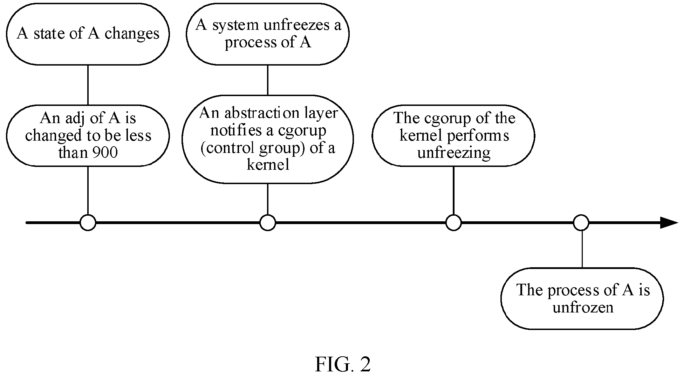

As shown in FIG. 2, when a state of the application A changes, and an adj value of the application A changes, for example, when the adj of the application A is less than 900, the system may unfreeze the process of the application A (for example, CachedAppOptimizer may invoke unfreezeAppLSP to unfreeze the process of the application A). Before the process of the application A is formally unfrozen, it may be first checked whether the process has received a synchronization binder request (SYVC_RECEIVED_WHILE_FROZEN) during a frozen period. If the process has received the synchronization binder request, the process may be killed. Because the synchronization Binder to a frozen process makes a state of the process uncertain, the process needs to be killed. Then, the abstraction layer may instruct the cgroup of the kernel to unfreeze the process of the application A, and the cgroup of the kernel may unfreeze the process of the application A, so that the process of the application A is unfrozen.

However, according to the freezing policy of the tombstone mechanism, a process cannot be frozen (also may be referred to as frozen) within debounce time (for example, 10 minutes). This is to avoid a case that there is still a task that has not been completed when a process of an application enters a cached state, indirectly affecting user experience. Consequently, the freezing policy of the tombstone mechanism cannot ensure resource consumption of the electronic device within the debounce time, affecting performance and endurance of the electronic device.

In other related technologies, a basic freezing control cycle may be set. An application is dynamically controlled between freezing and unfreezing cyclically based on the set basic freezing control cycle, thereby achieving a balance between energy saving and normal execution of application functions.

However, the freezing control cycle is set for freezing and unfreezing an application. This cannot effectively resolve a problem that a background process preempts a CPU resource of a foreground application in some important scenarios (for example, an application starting scenario and an application exiting scenario).

This application provides a process freezing method, which can temporarily freeze a background process in a user interaction scenario (for example, an application starting scenario or an application exiting scenario) within an interval (for example, within debounce time) of another freezing solution. Resource consumption of a background process is reduced, a problem that the background process preempts a system resource of a foreground process is resolved, and performance and endurance of an electronic device are improved, thereby improving user experience.

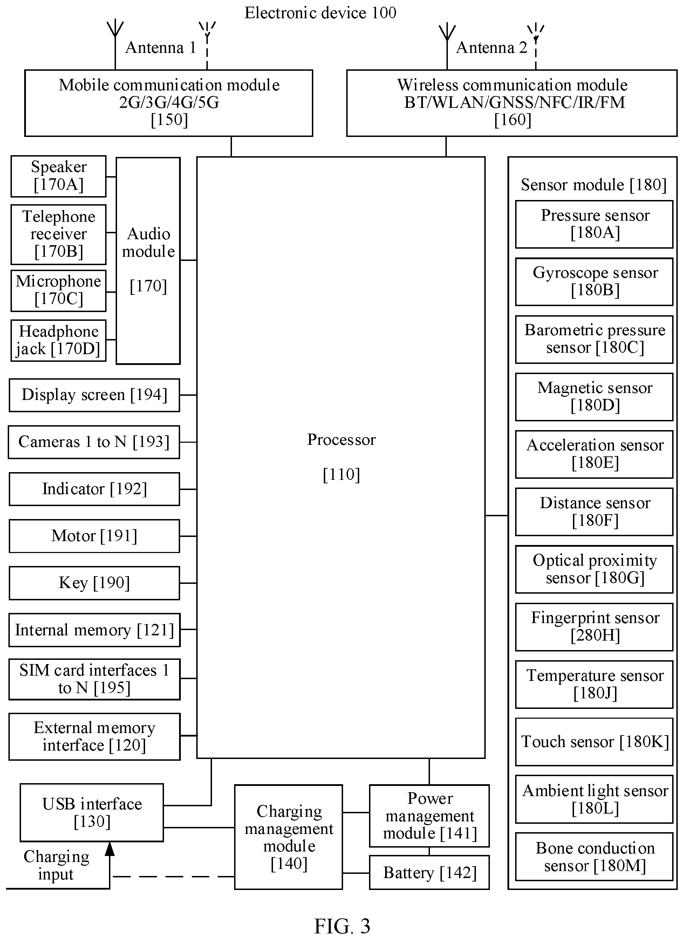

FIG. 3 is a schematic structural diagram of an electronic device 100 according to an embodiment of this application.

As shown in FIG. 3, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headphone jack 170D, a sensor module 180, a key 190, a motor 191, an indicator 192, a camera 193, a display screen 194, a subscriber identity module (subscriber identity module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment constitutes no specific limitation on the electronic device 100. In some other embodiments, the electronic device 100 may include more or fewer components than those shown in the figure, or some components may be combined, or some components may be split, or components are arranged in different manners. The components in the figure may be implemented by hardware, software, or a combination of the software and the hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal according to instruction operation code and a time-sequence signal, to complete control of fetching and executing instructions.

A memory may also be disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. Repeated access is avoided, and waiting time of the processor 110 is reduced, thereby improving system efficiency.

In some embodiments, the processor 110 may include one or more interfaces. The interface may include an integrated circuit (inter-integrated circuit, I2C) interface, an integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment is merely an example for description, and constitutes no limitation on the structure of the electronic device 100. In some other embodiments, the electronic device 100 may also use an interface connection manner different from that in the foregoing embodiment, or use a combination of a plurality of interface connection manners.

The charging management module 140 is configured to receive charging input from a charger. While charging the battery 142, the charging management module 140 may further supply power to the electronic device by using the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, and the like. In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 100 may be configured to cover one or more communication frequency bands. Different antennas may be further multiplexed to improve antenna utilization. For example, the antenna 1 may be multiplexed as a diversity antenna of a wireless local area network.

The mobile communication module 150 may provide a solution for wireless communication including 2G/3G/4G/5G and the like applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave for radiation by using the antenna 1.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transfers, to the baseband processor for processing, the low-frequency baseband signal obtained through demodulation. The low-frequency baseband signal is processed by the baseband processor and then transferred to the application processor. The application processor outputs a sound signal through an audio device (which is not limited to the speaker 170A, the telephone receiver 170B, or the like), or displays an image or a video through the display screen 194.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave by using the antenna 2, performs frequency modulation and filtering on the electromagnetic wave signal, and sends the processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation by using the antenna 2.

In some embodiments, the antenna 1 and the mobile communication module 150 of the electronic device 100 are coupled, and the antenna 2 and the wireless communication module 160 of the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS) and/or satellite based augmentation systems (satellite based augmentation systems, SBAS).

The electronic device 100 implements a display function by using the GPU, the display screen 194, the application processor, and the like. The GPU is a microprocessor for image processing and connects the display screen 194 and the application processor. The GPU is configured to perform mathematical and geometric computation, and render an image. The processor 110 may include one or more GPUs that execute a program instruction to generate or change display information.

The display screen 194 is configured to display an image, a video, and the like. The display screen 194 includes a display panel. The display panel may be a liquid crystal display (liquid crystal display, LCD) screen, a light-emitting diode (light-emitting diode, LED), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like.

The electronic device 100 may implement a shooting function by using the ISP, the camera 193, the video codec, the GPU, the display screen 194, the application processor, and the like. The ISP is configured to process data fed back by the camera 193. The camera 193 is configured to capture a still image or video. The digital signal processor is configured to process a digital signal, and in addition to a digital image signal, the digital signal processor may further process another digital signal. The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

There may be 1 to N cameras 193. For example, the electronic device may include 2 front-facing cameras and 4 rear-facing cameras. The NPU is a neural-network (neural-network, NN) computing processor that processes input information rapidly with reference to a structure of a biological neural network, for example, a transfer mode between human brain neurons, and may further continuously perform self-learning. The NPU may be used to implement an application such as intelligent cognition of the electronic device 100, for example, image recognition, facial recognition, voice recognition, and text understanding.

The external memory interface 120 may be configured to connect to an external storage card such as a Micro SD card, to expand a storage capability of the electronic device 100. The external storage card communicates with the processor 110 by using the external memory interface 120, to implement a data storage function, for example, store files such as music and a video into the external storage card. The internal memory 121 may be configured to store computer-executable program code. The executable program code includes instructions. The processor 110 runs the instructions stored in the internal memory 121, to perform various functional applications and data processing of the electronic device 100. For example, in an embodiment of this application, the processor 110 may execute the instructions stored in the internal memory 121, and the internal memory 121 may include a program storage area and a data storage area. The program storage area may store an operating system, an application required by at least one function (for example, a voice playing function or an image playing function), and the like. The data storage area may store data (for example, audio data and an address book) and the like created when the electronic device 100 is used. In addition, the internal memory 121 may include a highspeed random access memory, or may include a non-volatile memory, for example, at least one magnetic disk storage device, a flash memory, or a universal flash storage (universal flash storage, UFS).

The electronic device 100 may implement an audio function, for example, music playback or recording, by using the audio module 170, the speaker 170A, the telephone receiver 170B, the microphone 170C, the headphone jack 170D, the application processor, and the like.

The audio module 170 is configured to convert digital audio information into analog audio signal output, and is further configured to convert analog audio input into a digital audio signal. The audio module 170 may be further configured to encode and decode an audio signal. The speaker 170A, also referred to as "horn", is configured to convert an audio electrical signal into a sound signal. The telephone receiver 170B, also referred to as "handset", is configured to convert an audio electrical signal into a sound signal. The microphone 170C, also referred to as a "voice tube" or a "mike", is configured to convert a sound signal into an electrical signal. The headphone jack 170D is configured to connect to a wired headphone.

The key 190 includes a power key, a volume key, and the like. The key 190 may be a mechanical key, or a touch-type key. The electronic device 100 may receive key input, and generate key signal input related to user settings and function control of the electronic device 100. The motor 191 may generate a vibration prompt. The motor 191 may be configured for an incoming call vibration prompt or a touch vibration feedback. The indicator 192 may be an indicator light that may be configured to indicate a charging state and a power change, or may be configured to indicate a message, a missed call, a notification, and the like. The SIM card interface 195 is configured to connect to a SIM card. The SIM card may be inserted into the SIM card interface 195 or unplugged from the SIM card interface 195, to come into contact with or be separated from the electronic device 100. The electronic device 100 may support 1 or N SIM card interfaces, where N is a positive integer greater than 1. The SIM card interface 195 may support a Nano SIM card, a Micro SIM card, a SIM card, and the like.

Methods in the following embodiments may all be implemented in the electronic device 100 with the foregoing hardware structure.

A software system of the electronic device 100 may use a layered architecture, an event-driven architecture, a microkernel architecture, a microservice architecture, or a cloud architecture. In this embodiment of the present invention, an Android system with a layered architecture is used as an example to illustrate a software structure of the electronic device 100.

In the layered architecture, software is divided into several layers, and each layer has a clear role and task. The layers communicate with each other through an interface. In some embodiments, the Android system may include an application layer, an application framework layer, a kernel layer, and a hardware layer. It should be noted that, in this embodiment of this application, the Android system is used as an example for description. In another operating system (for example, a HarmonyOS or an iOS), the solutions of this application can still be implemented provided that functions implemented by functional modules are similar to those in embodiments of this application.

The application layer may include a series of application packages.

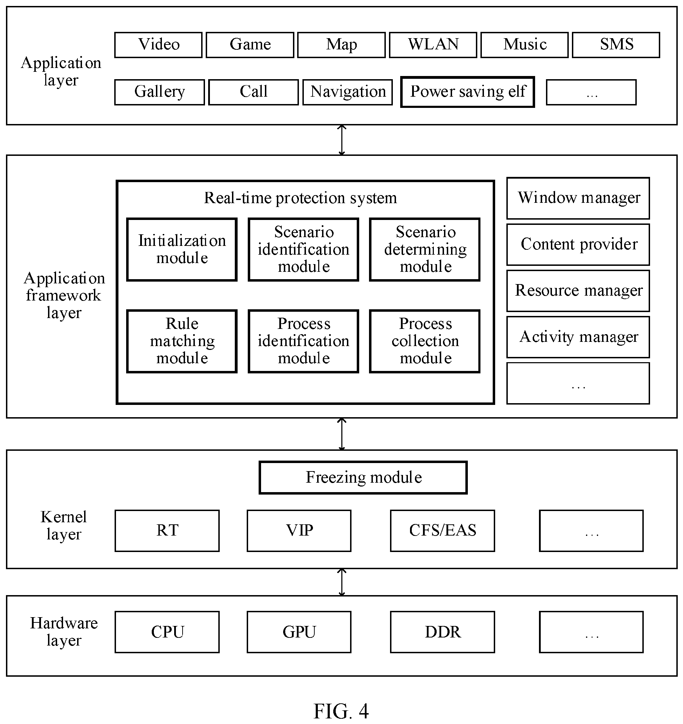

As shown in FIG. 4, the application packages may include a camera, a game, a map, a WLAN, a music, a message, a gallery, a call, a navigation, a power saving elf, and the like Certainly, the application layer may further include another application package, for example, a Bluetooth, a calendar, a camera, a setting, or another application. This is not limited in this application. In this embodiment of this application, the application layer may further include a first application, a second application, a third application, and the like. The first application, the second application, or the third application may be, for example, any one of the foregoing applications (for example, the video application and the game application).

In this embodiment of this application, the power saving elf application may be configured to determine whether a process is in a frozen state (for example, a frozen period of another freezing solution (for example, a tombstone mechanism solution)), and check whether a state of the process changes.

The application framework layer provides an application programming interface (application programming interface, API) and a programming framework for an application at the application layer. The application framework layer includes some predefined functions. For example, the application framework layer may include an activity manager, a window manager, a content provider, a view system, a resource manager, a notification manager, and the like. This is not limited in this embodiment of this application.

In this embodiment of this application, the application framework layer may further include a real-time protection system (iaware real-time subsystem). The real-time protection system may run in a system_server process. The real-time protection system may include an initialization module, a scenario identification module, a scenario determining module, a process collection module, a process identification module, a rule matching module, and the like. The process collection module, the process identification module, and the rule matching module belong to an iaware.freeze thread.

The initialization module is configured to read a status of a quick freezing function switch from a first preset configuration file. The status of the quick freezing function switch may be an enabled state, which indicates that a mobile phone may enable a quick freezing function provided in this application.

The scenario identification module is configured to identify a scenario of a noHome (noHome) application. The noHome application is an application other than desktop applications.

The scenario determining module is configured to determine whether a current scenario of an application belongs to a preset scenario. For example, the preset scenario may include at least one of an electronic device unlocking scenario, a scenario in which the electronic device enters or exits a leftmost home screen (leftmost home screen), a scenario in which a screen is off when the electronic device answers a call, a first application starting, a first application exiting scenario, a shooting scenario of a first application, and a frame loss scenario in the first application during sliding.

The electronic device unlocking scenario may include a fingerprint unlocking scenario, a password unlocking scenario, a face recognition unlocking scenario, and the like. This is not limited in this application. The fingerprint unlocking scenario is a scenario in which the electronic device collects a fingerprint of a user by using a fingerprint sensor in a screen-locked state, and compares the collected fingerprint with a fingerprint input by the user, to determine whether to unlock the electronic device. The password unlocking scenario is a scenario in which the electronic device receives a password input by a user in a screen-locked state, and compares the password with a password set by the user, to determine whether to unlock the electronic device. The face unlocking scenario is a scenario in which the electronic device collects face data by using a camera (for example, a front-facing camera) in a screen-locked state, and compares the collected face data with face data input by a user, to determine whether to unlock the electronic device.

The scenario in which the electronic device enters the leftmost home screen (leftmost home screen) is a scenario in which the electronic device displays the leftmost home screen after the electronic device receives a preset operation (for example, an operation of sliding a screen to the right on a home screen of the electronic device) of a user. Certainly, the preset operation is may be another operation. This is not limited in this application.

The scenario in which the screen is off when the electronic device answers a call is a scenario in which a screen is automatically off when the electronic device senses, by using a light sensor, that an object (for example, a side face of a user) approaches during a call.

The first application starting scenario may be a scenario in which the electronic device starts the first application after receiving an operation (for example, a tap operation) performed by a user on an identifier (an icon) of the first application on the desktop. Alternatively, the first application starting scenario may be a scenario in which the electronic device starts the first application after receiving an operation performed by a user on a card of the first application in a task list.

The first application exiting scenario may be a scenario in which the electronic device receives an operation of exiting the first application and returns to the desktop. The operation of exiting the first application may be, for example, an operation of tapping a home key (a functional key used for returning to the desktop) by a user. The home key may be a physical key or a virtual key. This is not limited in this application. Alternatively, the operation of exiting the first application may be an operation of tapping a return key (for example, tapping the return key once, or continuously tapping the return key twice) by a user. The return key be used for returning to an upper-level interface. Alternatively, the operation of exiting the first application may be a shortcut gesture operation. The shortcut gesture operation may be any one of the following operations: an operation of sliding upward a first distance from the bottom of a screen, an operation of sliding to the right from a left end of the screen, and an operation of sliding to the left from a right end of the screen.

The shooting scenario of the first application is a scenario in which a camera is invoked to perform shooting during running of the first application. For example, the first application may be a chat application. When a user needs to send a picture in a chatting process, the user may invoke a camera to shoot the needed picture.

The frame loss scenario in the first application during sliding may be a scenario in which during running of the first application, corresponding processing (for example, scrolling display) is performed in response to a sliding operation of a user, but freezing and frame loss occurs during the corresponding processing (for example, the scrolling display).

The process collection module is configured to collect process information of the electronic device, where the process information may include a process identifier (process id, PID) of a current active process.

The process identification module is configured to identify feature information of each process corresponding to the PID of the current active process. The feature information of the process may include a state, an association, a type, a permission, and the like of the process.

The rule matching module is configured to match the feature information of the current active process with a matching rule, to determine a to-be-frozen process.

The kernel layer is a layer between hardware and software. The kernel layer includes at least a display driver, a camera driver, an audio driver, and a sensor driver (not shown in the figure). The kernel layer may further include a real time (real time, RT) scheduler, a very important person (very important person, VIP) scheduler, a completely fair scheduler (completely air scheduler, CFS)/an energy aware scheduler (energy aware scheduler, EAS), and the like.

In this embodiment of this application, the kernel layer may further include a freezing module.

The freezing module is configured to freeze the to-be-frozen process, that is, set the to-be-frozen process to an uninterruptible sleep state (uninterruptible sleep status).

The hardware layer includes a central processing unit (central processing unit/processor, CPU), a GPU, a double data rate synchronous dynamic random-access memory (double data rate SDRAM (synchronous dynamic random-access memory), DDR SDRAM), and the like. Certainly, the hardware layer includes other hardware, for example, a display, a camera, and the like.

The Android system further may include other layers (not shown in the figure), for example. an Android runtime (Android runtime), a system library, a hardware abstraction layer (hardware abstraction layer, HAL), and the like. This is not limited in this application.

The system library may include a plurality of functional modules, for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provides fusion of 2D and 3D layers for a plurality of applications.

The media library supports playback and recording in a plurality of commonly used audio and video formats, a still image file, and the like. The media library can support a plurality of audio and video coding formats, such as MPEG4, H.264, MP3, AAC, AMR, JPG, and PNG.

The OpenGL ES is configured to implement three-dimensional graphics drawing, image rendering, synthesis, layer processing, and the like.

The SGL is a drawing engine for 2D drawing.

The Android runtime (Android Runtime) includes a core library and a virtual machine. The Android Runtime is responsible for scheduling and managing the Android system. The core library includes two parts: One part is a functional function that needs to be invoked by a java language, and the other part is a kernel library of Android. The application layer and the application framework layer run on the virtual machine. The virtual machine executes Java files of the application layer and the application framework layer as binary files. The virtual machine is configured to execute functions such as object lifecycle management, stack management, thread management, security and exception management, and garbage collection.

The HAL layer is encapsulation of a Linux kernel driver, provides an interface for an upper layer, and shields an implementation detail of lower-layer hardware.

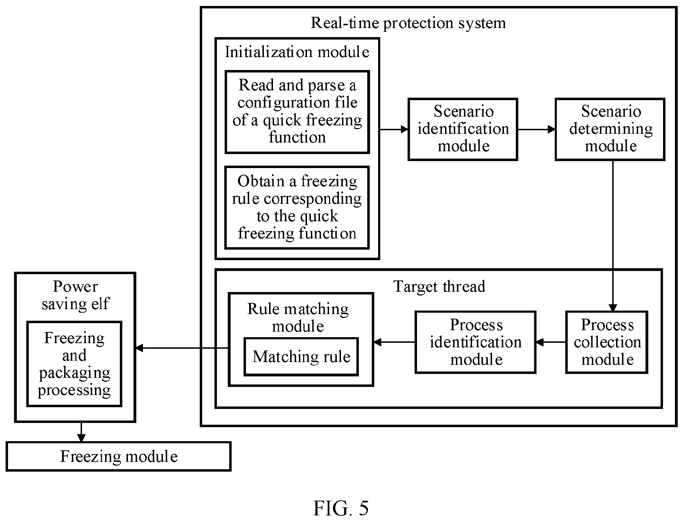

With reference to FIG. 5, the following describes software modules and interaction between the modules involved in the process freezing method according to the embodiments of this application.

As shown in FIG. 5, an initialization module may read and parse a configuration file (a first preset configuration file) of a quick freezing function, to determine a status of a quick freezing function switch. The status of the quick freezing function switch may be an enabled state, which indicates that a mobile phone may enable the quick freezing function provided in this application. When the status of the quick freezing function switch is the enabled state, the initialization module may obtain a matching rule of the quick freezing function. Then, the initialization module may send the matching rule of the quick freezing function to a rule matching module. When the status of the quick freezing function switch is the enabled state, a scenario identification module may identify a current scenario (a first scenario), and send the first scenario to a scenario determining module. The scenario determining module may determine whether the first scenario belongs to a preset scenario. For example, the preset scenario may include at least one of an electronic device unlocking scenario, a scenario in which the electronic device enters or exits a leftmost home screen (leftmost home screen), a scenario in which a screen is off when the electronic device answers a call, a first application starting scenario, a first application exiting scenario, a shooting scenario of the first application, and a frame loss scenario in the first application during sliding. If a scenario of an application belongs to the preset scenario, a target thread (for example, an iaware.freeze thread) is created. The target thread may include a process collection module, a process identification module, and the rule matching module. The process collection module may be configured to collect process information of an electronic device (for example, a mobile phone). The process information may include a PID of a current active process. The process collection module may send the process information to the process identification module. The process identification module may identify feature information of the current active process, and send feature information of each current active process to the rule matching module. The rule matching module matches the feature information of the current active process with a matching rule, to determine a to-be-frozen process. The rule matching module sends information about the to-be-frozen process to a power saving elf application. A freezing and packaging processing module of the power saving elf application may be configured to determine whether the process is in a frozen state (for example, a frozen period of another freezing solution (for example, a tombstone mechanism solution)), and check whether a state of the to-be-frozen process changes. If the to-be-frozen process is not in the frozen state, and the state of the process does not change, the power saving elf application instructs a freezing module to freeze the to-be-frozen process, that is, set the to-be-frozen process to an uninterruptible sleep state.

With reference the accompanying drawings, the following describes scenarios according to the embodiments of this application by using an example.

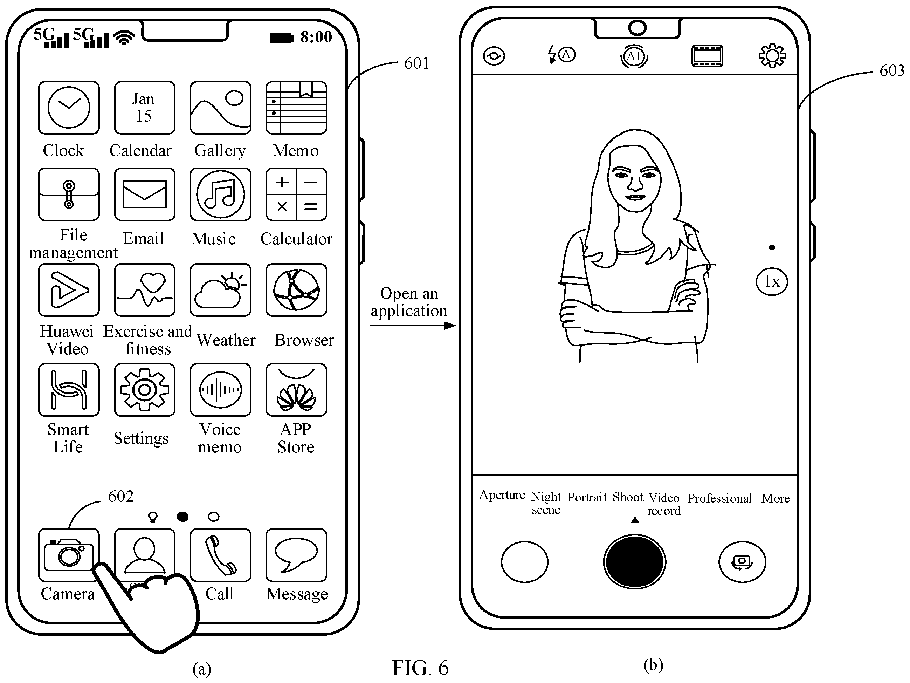

For example, as shown in (a) in FIG. 6, an electronic device (for example, a mobile phone) may display a main interface 601. The main interface 601 includes an identifier 602 of a camera application. The electronic device may receive an operation for example, a tap operation) performed by a user on the identifier 602 of the camera application. In response to the operation, the electronic device displays a startup animation (for example, the identifier 602 is gradually enlarged) of the camera application. Then, as shown in (b) in FIG. 6, the electronic device may display a shooting preview interface 603.

In this embodiment of this application, in response to the operation performed by the user on the identifier 602 of the camera application, the electronic device may recognize that the camera application is in a starting scenario, and may create a target thread. Process information of a plurality of processes of the electronic device is collected by using the target thread. A to-be-frozen process in the plurality of processes is determined. The to-be-frozen process is set to an uninterruptible sleep state (that is, the to-be-frozen process is frozen). Therefore, a corresponding background process may be frozen when the electronic device displays the startup animation of the camera application, to avoid a problem of freezing when the electronic device displays the startup animation of the camera application, so as to improve user experience.

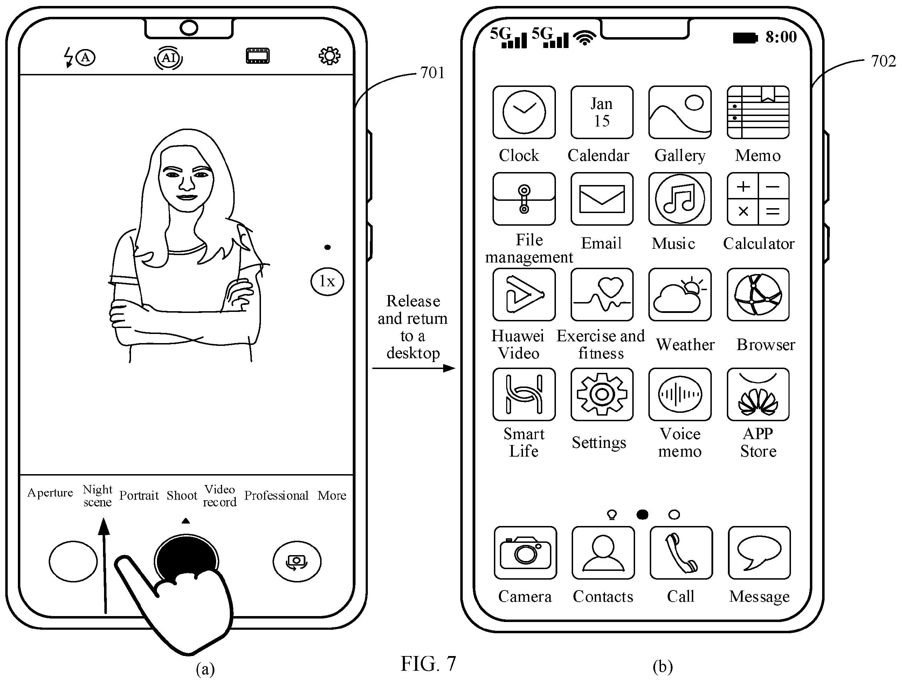

For another example, as shown in (a) in FIG. 7, the electronic device may receive, when displaying a preview interface 701 of the camera application, an operation of sliding upward a first distance from the bottom of a screen (an operation of exiting the camera application) by the user. In response to the operation, the electronic device may display an animation of exiting the camera application (for example, the interface 701 is gradually zoomed out). Then, as shown in (b) in FIG. 7, the mobile phone may display an interface 702 of the camera application.

In this embodiment of this application, in response to the operation of exiting the camera application by the user, the electronic device may recognize that the camera application is in an exiting scenario, and may create a target thread. Process information of a plurality of processes of the electronic device is collected by using the target thread. A to-be-frozen process in the plurality of processes is determined. The to-be-frozen process is set to an uninterruptible sleep state (that is, the to-be-frozen process is frozen). Therefore, a corresponding background process may be frozen when the electronic device displays the animation of exiting the camera application, to avoid a problem of freezing when the electronic device displays the animation of exiting the camera application, so as to improve user experience.

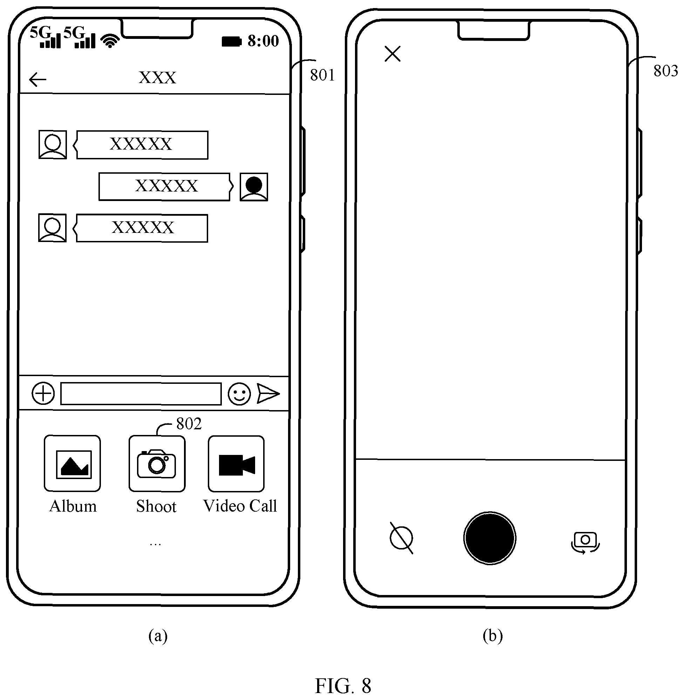

For another example, as shown in (a) in FIG. 8, the electronic device may receive, when displaying an interface 801 of a WeChat application^{®}, an operation of enabling a shooting function by a user (for example, a tap operation of the user on a shooting control 802). In response to the operation, as shown in (b) in FIG. 8, the electronic device may display a shooting interface 803.

In this embodiment of this application, in response to the operation of enabling the shooting function by the user, the electronic device may recognize that the camera application is in a shooting scenario, and create a target thread. Process information of a plurality of processes of the electronic device is collected by using the target thread. A to-be-frozen process in the plurality of processes is determined. The to-be-frozen process is set to an uninterruptible sleep state (that is, the to-be-frozen process is frozen). Therefore, a corresponding background process may be frozen when the electronic device performs shooting, to avoid a problem of freezing when the electronic device performs shooting, so as to improve user experience.

It should be understood that, the application scenarios provided in the embodiments of this application may further include another interface of another application. The application scenarios and the operations of the user are not specifically limited in the embodiments of this application.

For ease of understanding, the following describes a process of the process freezing method provided in the embodiments of this application with reference to the accompanying drawings.

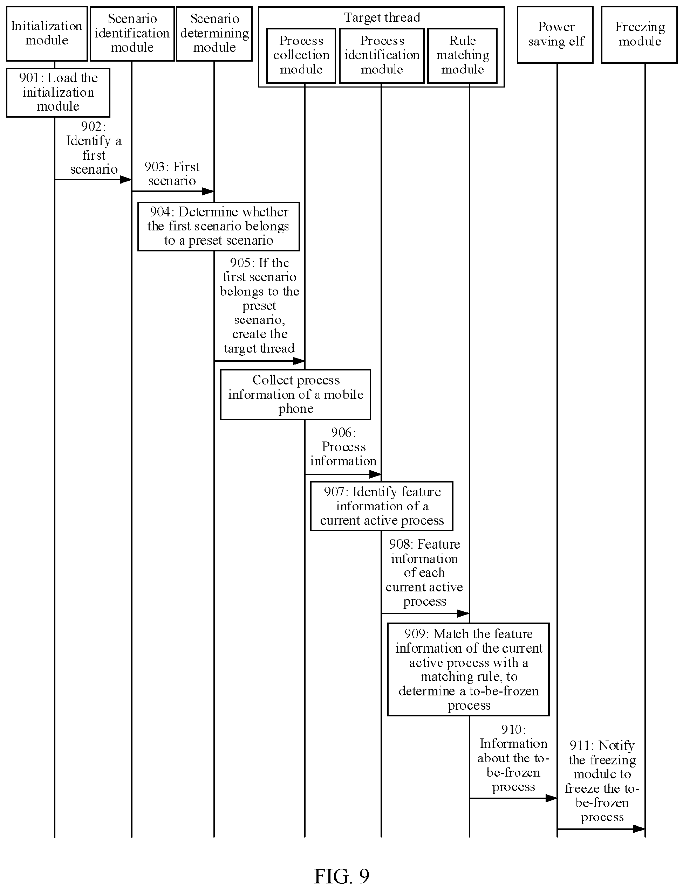

As shown in FIG. 9, an embodiment of this application provides a process freezing method, applied to an electronic device (for example, a mobile phone). An example in which the electronic device is the mobile phone is used. The mobile phone may include an initialization module, a scenario identification module, a scenario determining module, a process collection module, a process identification module, and a rule matching module that are at an application framework layer, a power saving elf application located at an application layer, and a freezing module located at a kernel layer. The method includes the following steps.

901: The mobile phone loads the initialization module.

When being powered on, the mobile phone may load the initialization module. The initialization module may read a status of a quick freezing function switch from a first preset configuration file. The status of the quick freezing function switch may be an enabled state, which indicates that the mobile phone may enable a quick freezing function provided in this application, that is, the mobile phone may perform the following steps (for example, step 902 to step 911).

902: The scenario identification module identifies a first scenario.

The first scenario may be, for example, an electronic device unlocking scenario, a scenario in which the electronic device enters or exits a leftmost home screen, a scenario in which a screen is off when the electronic device answers a call, a first application starting scenario, a first application exiting scenario, a shooting scenario of the first application, and a frame loss scenario in the first application during sliding, or a scenario of switching between landscape orientation and portrait orientation of the electronic device. The scenario of switching between landscape orientation and portrait orientation of the electronic device may be a scenario in which the electronic device switches a display effect of display content after the electronic device senses a posture change of the electronic device by using a sensor (a gravity sensor or an acceleration sensor).

The scenario identification module may identify a scenario of a noHome (noHome) application. The noHome application is an application other than desktop applications.

In a possible design, the scenario identification module may identify the first scenario in an "instrumentation" manner.

For example, the scenario identification module may perform "instrumentation" in a startup function of an application, that is, insert an instrumentation function into an insertion point of the startup function of the application in advance. When the insertion point of the startup function of the application is executed, the instrumentation function is executed, so that it may be identified in real time that the first scenario is an application starting scenario.

903: The scenario identification module sends the first scenario to the scenario determining module.

The scenario identification module may send a currently identified scenario (the first scenario) to the scenario determining module. For example, the first scenario may be an application starting scenario.

904: The scenario determining module determines whether the first scenario belongs to a preset scenario.

In this embodiment of this application, the scenario determining module may preset the preset scenario. For example, the preset scenario may include at least one of an electronic device unlocking scenario, a scenario in which the electronic device enters or exits a leftmost home screen, a scenario in which a screen is off when the electronic device answers a call, a first application starting scenario, a first application exiting scenario, a shooting scenario of the first application, and a frame loss scenario in the first application during sliding.

The scenario determining module may determine whether the current scenario (the first scenario) belongs to the preset scenario. For example, when the first scenario is the application starting scenario, the first scenario belongs to the preset scenario. When the first scenario is the scenario of switching between landscape orientation and portrait orientation, the first scenario does not belong to the preset scenario.

If the first scenario belongs to the preset scenario, freezing of a background process may be considered, to improve user interaction experience. In other words, subsequent steps (for example, step 905 to step 911) may be performed to determine a to-be-frozen background process, and freeze the to-be-frozen background process. If the first scenario does not belong to the preset scenario, subsequent steps do not need to be performed.

905: If the first scenario belongs to the preset scenario, create a target thread, and collect process information of the mobile phone.

In other words, when it is identified that the first scenario is the preset scenario, the target thread (for example, an iaware.freeze thread) may be created. The target thread may include the process collection module, the process identification module, and the rule matching module. The process collection module may be configured to collect the process information of the mobile phone.

The process information may include a PID of a current active process. The current active process may include a foreground process and a background process.

For example, the PID of the current active process may include, for example, 7813 and 8319.

906: The process collection module sends the process information to the process identification module.

The process collection module may send the PID of the current active process to the process identification module.

907: The process identification module may identify feature information of the current active process.

After receiving the PID of the current active process from the process collection module, the process identification module may identify feature information of each process corresponding to the PID of the current active process.

The feature information of the process may include a state, an association, a type, and a permission of the process.

The state of the process may be, for example, a foreground running state (that is, the process is a foreground process) or a background running state (that is, the process is a background process). The association of the process is used for indicating whether the process is related to a foreground process. The process related to the foreground process may communicate with the foreground process by using a binder mechanism. For example, the process related to the foreground process may include a floating window process.

The type of the process may be, for example, a navigation type, a motion or health detection type, or an audio type. Certainly, the type of the process may alternatively be another type. This is not limited in this application.

The permission of the process is used for indicating whether a user allows the process to run.

For example, when the type of the process is the navigation type (that is, the process is a navigation process), and the permission of the process is that the user allows the process to run, the process may continuously invoke a GPS to collect data.

When the type of the process is the motion or health detection type (that is, the process is a motion or health detection process), and the permission of the process is that the user allows the process to run, the process may continuously invoke a sensor (for example, an acceleration sensor) to collect data.

When the type of the process is the audio type (that is, the process is an audio process), and the permission of the process is that the user allows the process to run, the process may continuously invoke an audio module (for example, a microphone or a speaker) to play audio.

908: The process identification module sends feature information of each current active process to the rule matching module.

For example, it is assumed that the current active process includes processes whose PIDs are 7813 and 8319, and feature information of the processes may be shown in Table 1.

**Table 1**

| PID of a process | Feature information of the process | | | |
|---|---|---|---|---|
| | State of the process | Association | Type of the process | Permission of the process |
| 7813 | Background process | Not related to a foreground process | Navigation type | A user allows to run |
| 8319 | Background process | Not related to a foreground process | Audio type | The user does not allow to run |

In other words, the process whose PID is 7813 is the background process, is not related to the foreground process, the process type of the process is the navigation type, and the permission of the process is that the user allows to run. The process whose PID is 8319 is the background process, and is not related to the foreground process, the process type of the process is the audio type, and the permission of the process is that the user does not allow to run.

909: The rule matching module matches the feature information of the current active process with a matching rule, to determine a to-be-frozen process.

The rule matching module may obtain the matching rule of the quick freezing function from the initialization module. When a status of the quick freezing function switch is an enabled state, the initialization module may read and parse a second preset configuration file by using a configreader class, to obtain the matching rule of the quick freezing function. Then, the initialization module may send the matching rule of the quick freezing function to the rule matching module.

The matching rule may include the following matching conditions.

Condition 1: if a state of a process is a foreground running state (that is, the process is a foreground process), the process is not the to-be-frozen process.

Condition 2: if an association of a process is used for indicating that the process is related to a foreground process, the process is not the to-be-frozen process.

Condition 3: If a process type of a process is a preset type and a permission of the process is that a user allows to run, the process is not the to-be-frozen process.

For each process in current active processes, if feature information of the process meets any matching condition of the matching rule, it is considered that the process is not the to-be-frozen process. A process that is not the to-be-frozen process is deleted (removed) from the current active processes, to obtain the to-be-frozen process. In other words, the to-be-frozen process is a process other than a foreground process, a process related to the foreground process, and a background process allowed to run by a user. The background process allowed to run by the user includes at least one of a navigation process, a motion or health detection process, and an audio process.

After determining all to-be-frozen processes, the rule matching module may further determine parameters such as freezing duration (namely, first duration) and a freezing interval (namely, second duration) of all the to-be-frozen processes.

The freezing duration is duration for which all the to-be-frozen processes are in a frozen state (namely, an uninterruptible sleep state).

The freezing interval is a shortest time interval between two times of freezing, that is, a shortest time interval between an end moment (end time) when all the to-be-frozen processes are frozen last time and a start moment (start time) when all the to-be-frozen processes are frozen next time. Within the freezing interval, the process is in an unfrozen state, that is, is not in the uninterruptible sleep state.

The following describes, by using an example, a determining manner of the freezing duration.

In a possible design, if start time and end time of the first scenario can be identified, freezing duration of a background process may be adjusted as needed based on the start time and the end time of the first scenario. For example, the freezing duration may be duration of a time period between the start time and the end time of the first scenario.

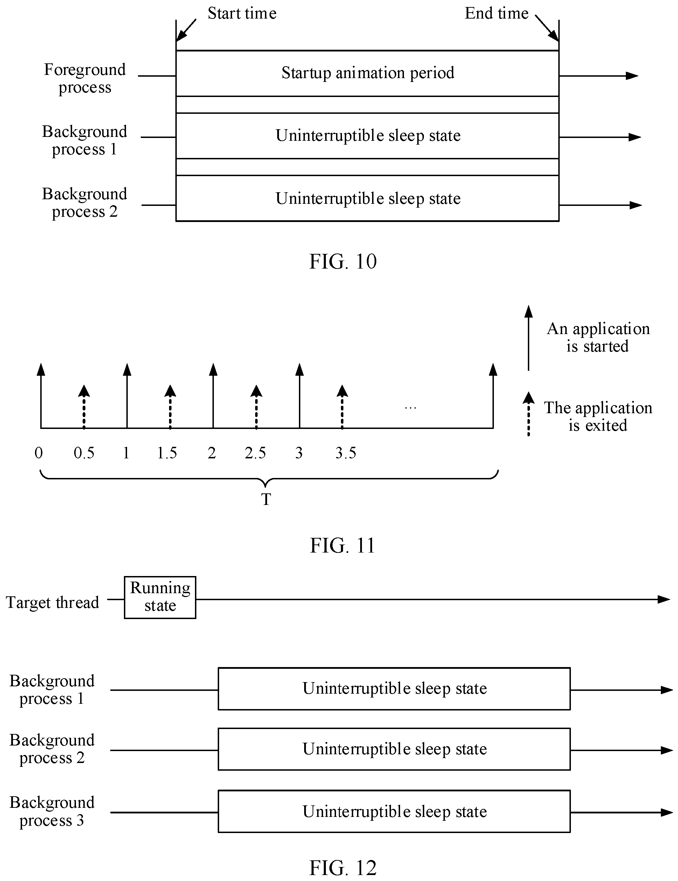

For example, when the first scenario is a starting scenario, start time and end time of an application starting scenario may be identified. Within the start time and the end time of the application starting scenario, to-be-frozen processes (for example, a background process 1 and a background process 2) may be frozen, that is, the background process 1 and the background process 2 are set to an uninterruptible sleep state. As shown in FIG. 10, within start time and end time of an application starting scenario, a process (a foreground process) of an application is in a startup animation period, and to-be-frozen processes (for example, a background process 1 and a background process 2) may be set to an uninterruptible sleep state (Uninterruptible Sleep (non-IO)).

In another possible design, if the start time and the end time of the first scenario cannot be identified, the freezing duration of the to-be-frozen process in different first scenarios may be determined according to a preset mapping relationship. In other words, the freezing duration may be determined according to first preset duration corresponding to the first scenario. For example, the freezing duration may be the same as the first preset duration corresponding to the first scenario.

For example, the preset mapping relationship may be shown in Table 2, and different scenarios may correspond to first preset duration of different gears.

**Table 2**

| First preset duration | First scenario |
|---|---|
| MIN-1.0s | A scenario in which the electronic device enters or exits a leftmost home screen, a scenario in which a screen is off when the electronic device answers a call, and the like. |
| DEFAULT-1.5s | A frame loss scenario in the electronic device during sliding, an electronic device unlocking scenario, and the like. |
| MAX-3s | A first application starting scenario, and the like. |

It should be noted that, Table 2 is merely an example for describing the preset mapping relationship, and the preset mapping relationship may be configured as other content, which is not limited in this application.

In some implementations, the preset mapping relationship may be determined according to the following steps.

S1: First, start N (for example, 20) applications and return the N applications to a background for running, to obtain N background processes. When the electronic device is in the first scenario, the N background processes are frozen for second preset duration (for example, 5s).

S2: Calculate a processor load value (namely, CPU load) once every preset time interval (for example, 20 ms) within second preset duration (for example, 5s).

For example, Table 3 shows processor load values respectively calculated at time intervals in different scenarios (a case 1 to a case 7 respectively represent different scenarios).

**Table 3**

| Preset time interval | Case 1 | Case 2 | Case 3 | Case 4 | Case 5 | Case 6 | Case 7 |
|---|---|---|---|---|---|---|---|
| 1^{st} 20 ms | 63% | 62% | 33% | 65% | 83% | 53% | 33% |
| 2^{nd} 20 ms | 59% | 89% | 82% | 39% | 79% | 59% | 29% |
| 3^{rd} 20 ms | 33% | 85% | 69% | 88% | 80% | 56% | 45% |
| ... | ... | ... | ... | ... | ... | ... | ... |

S3: For each scenario, within preset duration (for example, 5s), when a last processor load value is less than a preset value (for example, 80%), record a time difference (a first time difference) between a start moment (namely, a moment at which freezing is started) of the second preset duration and time (namely, target time) at which the last processor load value is less than the preset value (for example, 80%).

S4: For each scenario, perform step S1 to step S3 for L times (for example, 50 times) to obtain L time differences, calculate an average value of the L time differences, and determine preset duration corresponding to each scenario according to the average value.

As shown in Table 4, an example in which L is 50 is used. To be specific, for different scenarios (a case 1 to a case 7 respectively represent different scenarios), step S1 to step S3 may be performed for 50 times to obtain 50 time differences, and an average value of the 50 time differences is calculated. A unit of the time difference may be millisecond (ms).

**Table 4**

| Quantity of times | Case 1 | Case 2 | Case 3 | Case 4 | Case 5 | Case 6 | Case 7 |
|---|---|---|---|---|---|---|---|
| 1 | 1951 | 204 | 643 | 747 | 267 | 2056 | 1259 |
| 2 | 3185 | 216 | 465 | 791 | 189 | 423 | 592 |
| 3 | 5000 | 183 | 362 | 831 | 164 | 469 | 459 |
| ... | ... | ... | ... | ... | ... | ... | ... |
| 50 | 3294 | 162 | 435 | 729 | 116 | 436 | 338 |
| Average value | 3069.9 | 154.78 | 427.06 | 768.46 | 142.76 | 488.6 | 523.22 |

Further, the first preset duration corresponding to each scenario is determined according to the average value corresponding to each scenario.

For example, as shown in Table 4, an average value of time differences corresponding to the case 1 may be 3069.9 ms, and the average value is close to the maximum gear (MAX) in Table 3. Therefore, the first preset duration corresponding to the case 1 may be the maximum gear (MAX) in Table 2, that is, 3s.

For another example, as shown in Table 4, an average value of time differences corresponding to each of the case 2 to the case 7 is relatively close to the minimum gear (MIN) in Table 3. Therefore, the first preset duration corresponding to the case 2 to the case 7 may be the minimum gear (MIN) in Table 2, that is, 1s.

It should be noted that when the last processor load value is less than the preset value (for example, 80%) within the second preset duration, it may be considered that a load reduction effect is achieved. In other words, the time difference between the start moment of the second preset duration and the moment at which the last processor load value is less than the preset value is reasonable duration for freezing a background process. Therefore, it is proper to determine freezing duration corresponding to different scenarios according to the average value of the time differences, so that the load reduction effect can be achieved, and a problem that stability of the background process is affected due to excessively long freezing duration can also be avoided.

The following describes, by using an example, a determining manner of the freezing interval.

In some embodiments, a test scenario for rapid application startup and exit may be constructed. For example, FIG. 11 is a schematic diagram of a test scenario for rapid application startup and exit. It is assumed that within a period of time, for example, within a time period T, an application is started every 1s, and each application is exited after running for 0.5s. For example, an application A may be started at 0s, the application A may be exited at 0.5s, an application B may be started at 1s, the application B may be exited at 1.5s, and so on.

For the test scenario for rapid application startup and exit, different freezing policies may be used, and freezing ratios of the different freezing policies are calculated. Different freezing policies correspond to different values of freezing duration and/or freezing intervals.

The freezing ratio=freezing time/total time. The freezing time is a sum of freezing duration within the total time. The total time is duration of a period of time (for example, the time period T).

Table 5 shows freezing ratios when different freezing policies are used within a period of time (for example, within the time period T, where the time period T may be, for example, 15s). Different freezing policies correspond to different values of freezing duration and/or freezing intervals.

**Table 5**

| Freezing policy | Freezing duration (s) | Freezing interval (s) | Freezing ratio (%) |
|---|---|---|---|
| Policy 0 | 1.5 | 4.5 | 30 |
| Policy 1 | 1.5 | 3 | 40 |
| Policy 2 | 1.5 | 2 | 40 |
| Policy 3 | 1.5 | 1 | 53.3 |
| Policy 4 | 2 | 3 | 40 |
| Policy 5 | 2 | 2 | 53.3 |
| Policy 6 | 2 | 1 | 66.7 |
| Policy 7 | 3 | 3 | 60 |
| Policy 8 | 3 | 2 | 60 |
| Policy 9 | 3 | 1 | 76.7 |
| Policy 10 | 3 for start and 1.5 for exit | 3 | 60 |
| Policy 11 | 3 for start and 1.5 for exit | 2 | 60 |
| Policy 12 | 3 for start and 1.5 for exit | 1 | 66.7 |
| Policy 13 | 4 | 3 | 56.7 |
| Policy 14 | 4 | 2 | 73.3 |
| Policy 15 | 4 | 1 | 80 |
| Policy 16 | 5 | 3 | 66.7 |
| Policy 17 | 5 | 2 | 70 |
| Policy 18 | 5 | 1 | 86.7 |

Freezing duration of the policy 10 to the policy 12 indicates that in an application starting scenario, the freezing duration is 3s, and in an application exiting scenario, the freezing duration is 1.5s. Freezing duration of other policies is the same in the application starting scenario and the application exiting scenario.

It can be learnt according to Table 1 that, longer freezing duration indicates a shorter freezing interval, a larger freezing ratio, and higher freezing triggering efficiency. In other words, a shorter freezing interval indicates higher freezing triggering efficiency. However, if the freezing interval is excessively short (too short), stability of (a process of) an application may be affected. For example, an example in which an application is a WeChat application^{®} is used. The WeChat application^{®} may receive a message within a freezing interval. If the freezing interval is excessively short, the WeChat application^{®} may be frozen again before having time to receive the message, causing an exception in receiving the message by the WeChat application^{®}, and affecting stability of the WeChat application^{®}. Therefore, when the freezing interval is set, the freezing ratio and application stability may be comprehensively considered, to reach a balance between the freezing ratio and the application stability.

In some embodiments, the freezing ratio and the application stability are comprehensively considered, so that the freezing interval may be set to 1s.

910: The rule matching module sends information about the to-be-frozen process to the power saving elf application.

The information about the to-be-frozen process may include a PID, freezing duration, and a freezing reason of the to-be-frozen process. The freezing reason may be used for indicating the first scenario (for example, the application starting scenario).

After obtaining the information about the to-be-frozen process, the power saving elf application may perform the following determining:

1: Determine whether a process indicated by the PID of the to-be-frozen process is in a frozen state (for example, a frozen period of another freezing solution (for example, a tombstone mechanism solution)).

2: If the process indicated by the PID of the to-be-frozen process is not in the frozen state, further check whether a state of the process changes. For example, whether the process changes from a background process to a foreground process, or changes from a background process unrelated to a foreground process to a process related to the foreground process is checked.

911: The power saving elf application instructs the freezing module to freeze the to-be-frozen process.

If the power saving elf application determines that the process indicated by the PID of the to-be-frozen process is not in the frozen state, and the state of the process does not change, the power saving elf application may instruct the freezing module to freeze the to-be-frozen process.

If the power saving elf application determines that a part of the process indicated by the PID of the to-be-frozen process is in the frozen state, or the state of the process changes, the power saving elf application may delete the part of the process from the to-be-frozen process, and send a remaining process to the freezing module at the kernel layer for freezing.

For example, the power saving elf application may write the PID of the to-be-frozen process into a cgroup.processes file, and write a Frozen state into a cgroup.freeze file, so that the freezing module at the kernel layer freezes the to-be-frozen process, that is, sets the to-be-frozen process to an uninterruptible sleep state.

For example, if the electronic device is in the first scenario, as shown in FIG. 12, a target thread may be created. When the target thread is in a running state, to-be-frozen processes (for example, a background process 1, a background process 2, and a background process 3) may be determined. The target thread may freeze, by using the power saving elf application and the freezing module at the kernel layer, the to-be-frozen processes, that is, set the to-be-frozen processes (for example, the background process 1, the background process 2, and the background process 3) to an uninterruptible sleep state.

In some embodiments, when background processes are in a freezing period, there may be some background processes that occupy relatively high CPU load.

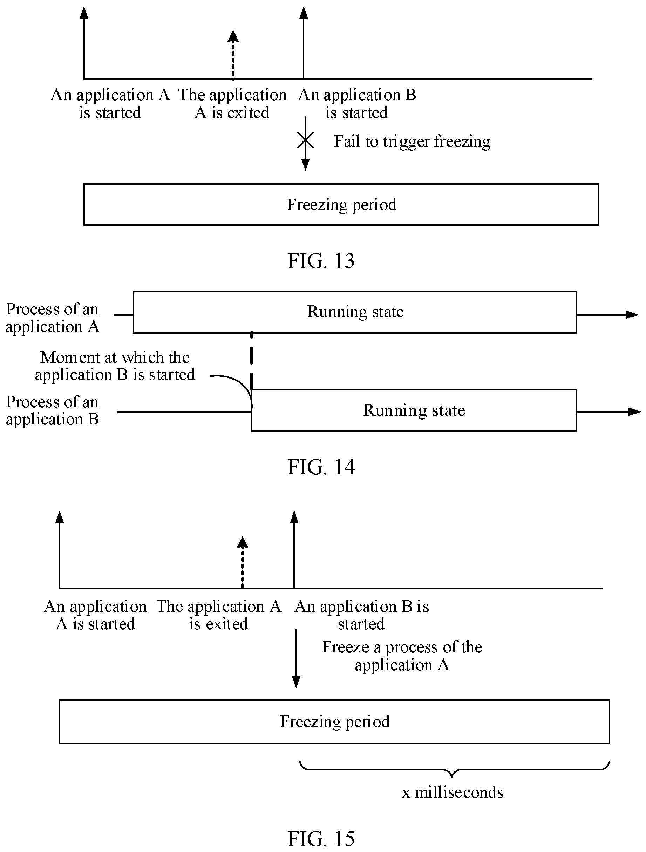

For example, as shown in FIG. 13, it is assumed that within a freezing period, a user exits (to a desktop) from an application A (for example, a first application). In this case, a process of the application A is switched from a foreground process to a background process. Then, the user starts an application B (for example, a second application). Because rapid freezing cannot be triggered within the freezing period (that is, step 911 cannot be performed), In this case, the background process corresponding to the application A still occupies relatively high CPU load, which affects a startup speed of the application B.

As shown in FIG. 14, after the application A is exited, the application B is entered, and the application B is started slowly. This is because the process of the application A is still in a running state, and is not frozen, and occupies the relatively high CPU load. Consequently, the startup speed of the application B is affected.

An embodiment of this application provides a solution (which may be referred to as a targeted freezing solution), which can perform targeted freezing on a background process that occupies relatively high CPU load within a freezing period.

The targeted freezing solution provided in this embodiment of this application is that within the freezing period, if a new background process (for example, a background process of a first application) is identified, the identified new background process may be frozen according to a preset rule.

For example, the preset rule may be that if remaining freezing duration is greater than or equal to x milliseconds, the identified new background process is frozen. A value of x may be 500 or 1000. This is not specifically limited in this application. Optionally, CPU load of the new background process identified within the freezing period is higher than a preset threshold (for example, 80%).

The remaining freezing duration=lastFreezeDurationTime-(currentTime-LastFreezeTime). lastFreezeDuration Time indicates duration of last (previous) freezing (namely, duration of a current freezing period). currentTime indicates current time, that is, start time at which a new scenario (the second scenario, for example, a starting scenario of the application B) is identified within the current freezing period. LastFreezeTime indicates start time of the last (previous) freezing. In other words, the remaining freezing duration is a time difference (the second time difference) between the start time of the second scenario and end time of the freezing period.

For example, as shown in FIG. 15, within a freezing period, a user exits from an application A (to a desktop), and then the user starts an application B. If duration between a moment at which the application B is started and end time of the freezing period is equal to x milliseconds, a process of the application A may be frozen. x is greater than 0.

It should be noted that, if the remaining freezing duration is greater than x milliseconds, it indicates that the current freezing period still lasts for relatively long time. In this case, targeted freezing may be performed on a background process that occupies relatively high CPU load, to avoid affecting an application started within the current freezing period due to the background process that occupies the relatively high CPU load.

In some embodiments, within a freezing interval, there may be some background processes that occupy relatively high CPU load. However, freezing cannot be triggered within the freezing interval. This is because if freezing is triggered within the freezing interval, an application stability problem may be caused.

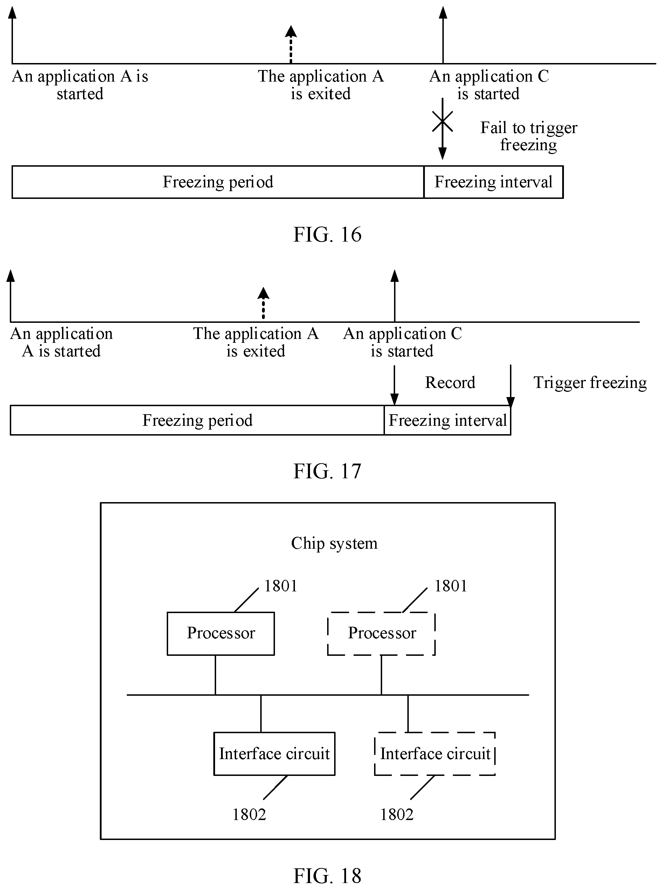

For example, as shown in FIG. 16, it is assumed that within a freezing interval, an application C is started. In this case, if freezing is triggered, an application stability problem may be caused.

An embodiment of this application provides a solution (an additional freezing solution). Within a freezing interval, if a new user interaction scenario is identified (for example, a third application is in a third scenario), and the third scenario belongs to a preset scenario, start time of the new user interaction scenario may be recorded, a time difference (a third time difference) between the start time of the new user interaction scenario and end time of the freezing interval is calculated, and the time difference is delayed to trigger freezing. In other words, when the freezing interval ends, "additional freezing" triggers freezing, to reduce processor load as soon as possible.

For example, as shown in FIG. 17, when an application C is started, startup time of the application C may be recorded, a time difference between the startup time of the application C and end time of a freezing interval is calculated, and the time difference is delayed to trigger freezing. In other words, when the freezing interval ends, "additional freezing" triggers freezing, to reduce processor load as soon as possible.

Based on the foregoing, the targeted freezing solution may be used to resolve a problem that quick freezing cannot be triggered within a freezing period and high processor load is caused, and the additional freezing solution may be used to resolve a problem that quick freezing cannot be triggered within a freezing interval and high processor load is caused.

Based on the method provided in this application, when an electronic device is in a first scenario, a target thread may be created, and a to-be-frozen process in a plurality of processes of the electronic device is set to an uninterruptible sleep state based on the target thread, so that resource consumption of an application running in a background can be reduced, and performance and endurance of the electronic device can be improved.

Some embodiments of this application provide an electronic device, and the electronic device may include: a touch screen, a memory, and one or more processors. The touch screen and the memory are coupled to the processor. The memory is configured to store computer program code, and the computer program code includes computer instructions. When the processor executes the computer instructions, the electronic device may perform various functions or steps performed by the electronic device in the foregoing method embodiments. For a structure of the electronic device, refer to the structure of the electronic device 100 in FIG. 3.

An embodiment of this application further provides a chip system (for example, a system on a chip (system on a chip, SoC)). As shown in FIG. 18, the chip system includes at least one processor 1801 and at least one interface circuit 1802. The processor 1801 and the interface circuit 1802 may be connected to each other through a line. For example, the interface circuit 1802 may be configured to receive a signal from another apparatus (for example, a memory of an electronic device). For another example, the interface circuit 1802 may be configured to send a signal to another apparatus (for example, the processor 1801 or a touch screen of an electronic device). For example, the interface circuit 1802 may read instructions stored in the memory, and send the instructions to the processor 1801. The instructions, when executed by the processor 1801, may cause the electronic device (for example, a mobile phone) to perform steps in the foregoing embodiments. It is clear that the chip system may further include another discrete device. This is not specifically limited in this embodiment of this application.

An embodiment of this application further provides a computer-readable storage medium. The computer-readable storage medium includes computer instructions. When the computer instructions are run on an electronic device, the electronic device (for example, a mobile phone) is enabled to perform the functions or steps performed by the electronic device in the foregoing method embodiments.

An embodiment of this application further provides a computer program product. When the computer program product runs on an electronic device, the electronic device is enabled to (for example, a mobile phone) perform the functions or steps performed by the electronic device in the foregoing method embodiments.

Through the descriptions of the foregoing implementations, a person skilled in the art may clearly understand that, for the purpose of convenient and brief description, only division of the foregoing functional modules is used as an example for description. During actual application, the foregoing functions may be allocated to and completed by different functional modules according to requirements. That is, an inner structure of an apparatus is divided into different functional modules to complete all or some of the functions described above.

In the several embodiments provided in this application, it should be understood that the disclosed apparatus and method may be implemented in other manners. For example, the described apparatus embodiment is merely an example. For example, the module or unit division is merely a logical function division and may be other division during actual implementation. For example, a plurality of units or components may be combined or integrated into another apparatus, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated. A part displayed as a unit may be one physical unit or a plurality of physical units, that is, may be located in one place, or may be distributed in multiple different places. Some or all of the units may be selected based on actual requirements to achieve the objectives of the solutions of the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of steps of the methods described in the embodiments of the present application. The foregoing storage medium includes: any medium that can store program code, such as a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be used as the protection scope of the claims.

## Claims

1. A process freezing method, applied to an electronic device, wherein the method comprises:
creating a target thread in response to the electronic device being in a first scenario;
determining a to-be-frozen process based on the target thread; and
setting the to-be-frozen process to an uninterruptible sleep state (uninterruptible sleep status) based on the target thread.

2. The method according to claim 1, wherein
the electronic device comprises a first application, and the first scenario comprises at least one of an electronic device unlocking scenario, a scenario in which the electronic device enters or exits a leftmost home screen (leftmost home screen), a scenario in which a screen is off when the electronic device answers a call, a first application starting scenario, a first application exiting scenario, a shooting scenario of the first application, and a frame loss scenario in the first application during sliding.

3. The method according to claim 1, wherein the to-be-frozen process is a process other than a foreground process, a process related to the foreground process, and a background process allowed to run by a user.

4. The method according to claim 3, wherein
the background process allowed to run by the user comprises at least one of a navigation process, a motion or health detection process, and an audio process.

5. The method according to any one of claims 1 to 4, wherein the setting the to-be-frozen process to an uninterruptible sleep state comprises:
setting the to-be-frozen process to the uninterruptible sleep state within first duration, wherein
the first duration is determined according to start time and end time of the first scenario.

6. The method according to any one of claims 1 to 4, wherein the setting the to-be-frozen process to an uninterruptible sleep state comprises:
setting the to-be-frozen process to the uninterruptible sleep state within first duration, wherein
the first duration is determined according to first preset duration corresponding to the first scenario.

7. The method according to claim 6, wherein the first preset duration corresponding to the first scenario is determined according to the following steps:
step 1: when the electronic device is in the first scenario, freezing N background processes for second preset duration, wherein N is an integer greater than or equal to 1;
step 2: within the second preset duration, calculating a processor load value once every preset time interval;
step 3: recording a first time difference between start time of the second preset duration and target time, wherein the target time is time at which a last calculated processor load value is less than a preset value within the second preset duration; and
step 4: performing step 1 to step 3 for L times to obtain L first time differences, calculating an average value of the L first time differences, and determining the first preset duration corresponding to the first scenario according to the average value, wherein L is an integer greater than or equal to 2.

8. The method according to claim 6 or 7, wherein
the first preset duration corresponding to the first scenario is 1 second when the first scenario is the scenario in which the electronic device enters the leftmost home screen or the scenario in which the screen is off when the electronic device answers a call;
the first preset duration corresponding to the first scenario is 1.5 seconds when the first scenario is the electronic device unlocking scenario or the frame loss scenario in the first application during sliding; and
the first preset duration corresponding to the first scenario is 3 seconds when the first scenario is the first application starting scenario.

9. The method according to any one of claims 1 to 8, wherein the electronic device comprises a second application, and the method further comprises:
setting, in response to the second application being in a second scenario, a process corresponding to the first application to the uninterruptible sleep state within the first duration.

10. The method according to claim 9, wherein the setting a process corresponding to the second application to the uninterruptible sleep status comprises:
if a second time difference between start time of the second scenario and end time of the first duration is greater than a preset time difference, setting the process corresponding to the second application to the uninterruptible sleep state.

11. The method according to any one of claims 5 to 10, wherein
the to-be-frozen process exits the uninterruptible sleep state after the to-be-frozen process is set to the uninterruptible sleep state for the first duration, and the to-be-frozen process is set to the uninterruptible sleep state again after an interval of at least second duration.

12. The method according to claim 11, wherein
the second duration is 1 second.

13. The method according to claim 11 or 12, wherein the electronic device comprises third application, and the method further comprises:
within the second duration, in response to the third application being in a third scenario, recording start time of the third scenario, calculating a third time difference between the start time of the third scenario and end time of the second duration, and setting the to-be-frozen process to the uninterruptible sleep state after the third time difference.

14. An electronic device, comprising a display screen, a processor, and a memory, wherein the memory stores program instructions; and the processor is configured to run the program instructions stored in the memory, to enable the electronic device to perform the method according to any one of claims 1 to 13.

15. A computer-readable storage medium, comprising program instructions, wherein when the program instructions are run on an electronic device, the electronic device is enabled to perform the method according to any one of claims 1 to 13.
